# EUROPEAN PATENT SPECIFICATION

(11) **EP 0 886 269 B1**
(45) Date of publication and mention of the grant of the patent: **07.06.2006**
(21) Application number: 98302732.7
(22) Date of filing: 08.04.1998
(51) Int. Cl.: G11B 7/24, G11B 7/007

(54) **Optical disk satisfying plural standards**
Optische Platte, die eine Vielzahl von Standards erfüllt
Disque optique qui remplit une pluralité de standards

(30) Priority: 18.06.1997 KR 9725365
(43) Date of publication of application: 23.12.1998
(73) Proprietor: SAMSUNG ELECTRONICS CO., LTD., Suwon-City, Kyungki-do (KR)
(72) Inventor: Ko, Jung-Wan, Suwon-shi, Kyonggi-do (KR)
(74) Representative: Chugg, David John

(56) References cited:
- EP-A- 0 720 159
- EP-A- 0 737 966
- EP-A- 0 745 985
- EP-A- 0 768 652
- WO-A-98/00842
- DE-A- 3 741 910

## Description

The present invention relates to an optical information recording medium, and in particular, to a multilayered optical disk.

An optical disk, one of optical information recording media, is widely used to record and reproduce various data including audio and video data. Such optical disks include a compact disk (CD), a digital video disk (DVD), a laser disk (LD), and a mini disk (MD). Among them, the CD is a major optical disk which has widely been used so far, and the DVD had recently emerged. The DVD is expected to find wide use as a next generation recording medium for recording and reproducing video and audio data because it can accommodate 17-GB data in maximum, enough to store one movie on a single disk, using high-density digital compression technology, it is as large as a conventional CD, provides higher image quality than an LD, and allows simultaneous dubbing of a plurality of languages for a movie to be appreciated in a selected language.

Meanwhile, CDs and their reproducing devices are widely used in audio systems, whereas DVDs and their reproducing devices have just started to be provided. Hence, CDs will be more popular than DVDs at least for the time being. In this context, it is preferable to fabricate a DVD which can be compatibly reproduced in both CD and DVD reproducing devices.

However, CD and DVD systems differ in standard, wavelength of light used for reproducing data, and mechanical mechanism. That is, light sources as provided in CD and DVD standards are a 780nm infrared laser and a 680-635nm red laser, respectively. Besides, a CD is 1.2mm thick, while a dual DVD currently used is a stack of two 0.6mm-thick disks with their respective recording layers attached to each other to allow recording and reproduction of data on and from both surfaces.

As described above, a single optical disk cannot accommodate both types of data separately reproducible in a conventional CD reproducing device and a DVD reproducing device.

Therefore, due to its inability of satisfying different standards of reproducing devices the optical disk cannot be used concurrently and compatibly for different purposes. The same problem is encountered when different light sources or mechanical mechanisms are used for different standards.

EP-A-0720159, EP-A-0745985, EP-A-0737966 and WO98/00842 all disclose an optical recording medium having dual information surfaces on which information can be reproduced by use of one optical head. Each optical recording medium is designed to enable playback by both a low-density player such as a CD player and also a high-density player such as a DVD player. EP-A-0720159 forms the pre-characterising portion of the claims appended hereto.

Accordingly, an aim of preferred embodiments of the present invention is to provide an improved optical disk satisfying different standards.

According to a first aspect of the invention, there is provided an optical disk comprising: a first transparent substrate having a first data pit pattern formed on a surface thereof by recording first standard data according to a first optical disk standard; a reflection film for reflecting the light of the first optical disk standard; a second transparent substrate having a second data pit pattern formed on a surface thereof by recording data according to a second optical disk standard; a semitransmission film disposed between the data pit pattern-free surface of the first transparent substrate and the second data pit pattern, and having a high transmittance for light of the first optical disk standard and a high reflectance for light of the second optical disk standard; and a connection layer for connecting the data pit pattern-free surface of the first transparent substrate to the semitransmission film in a light transmissive way; a selective reflection layer being disposed between the reflection film and the first data pit pattern, and having a high absorptance for the light of the second optical disk standard, and hence having a high reflectance for light of a wavelength based on a first optical disk standard and a high absorptance for light of a wavelength based on a second optical disk standard different from the first standard.

The selective reflection layer preferably comprises an organic pigment layer.

The semitransmission film is preferably a dielectric film.

Preferably, the disk further comprises a protection film adjacent to the reflection film.

The total thickness of the semitransmission film and the second transparent substrate is preferably set based on the second optical disk standard, and the total thickness of the protection film, the selective reflection layer, the first transparent substrate, the semitransmission film, and the second transparent substrate is set on the first optical disk standard.

Preferably, the first optical disk standard thickness is 1.2mm, and the second optical disk standard thickness is 0.6mm.

The light of the first optical disk standard is preferably a 780 laser beam, and the light of the second optical disk standard is a laser beam between 680nm and 635nm.

Preferably, the first optical disk standard is a CD standard, and the second optical disk standard is a DVD standard.

The first optical disk standard light may be between 680nm and 635nm, and the second optical disk light may be shorter than 600nm.

For a better understanding of the invention, and to show how embodiments of the same may be carried into effect, reference will now be made, by way of example, to the accompanying diagrammatic drawings, in which:
Figure 1 is a schematic sectional view of an optical disk according to an embodiment of the present invention;
Figure 2 is a graph showing an optical reflection characteristic of a semitransmission film shown in Figure 1;
Figure 3 is a graph showing an optical transmission characteristic of the semitransmission film shown in Figure 1;
Figure 4 is a graph showing an optical absorption characteristic of an organic pigment layer shown in Figure 1;
Figure 5 is a graph showing an optical reflection characteristic of the organic pigment layer and a reflection film shown in Figure 1;
Figure 6 is an exemplary view of light reflection and transmission when reproducing the optical disk shown in Figure 1 in accordance with the CD standard; and
Figure 7 is an exemplary view of light reflection and transmission when reproducing the optical disk shown in Figure 1 in accordance with the DVD standard.

A preferred embodiment of the present invention will be described in detail, and it should be noted that like reference numerals denote the same components throughout, and the detailed description of known functions and structures of the present invention will be avoided if it is deemed to obscure the subject matter of the present invention.

For description of the present invention, CD and dual-DVD standards are exemplarily used as first and second standards, respectively. In this case, a CD standard laser wavelength is 780nm, and a DVD standard laser wavelength is 680-635nm and, in the following discussion will be assumed to be 650nm.

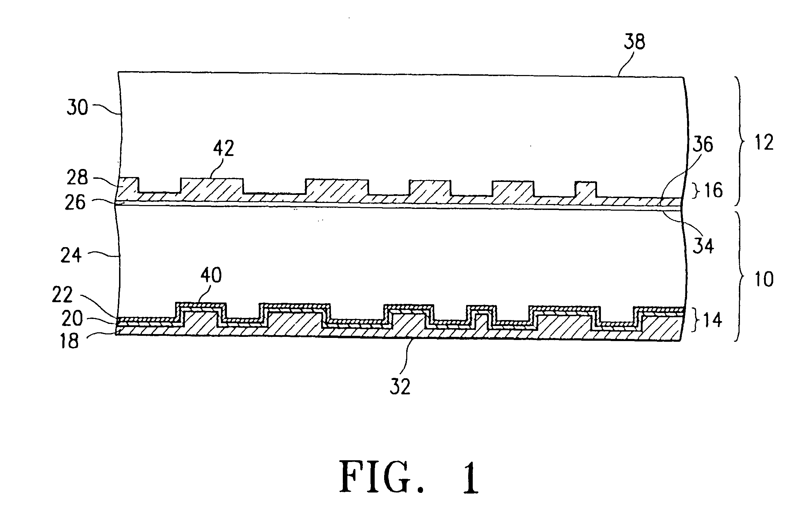

Figure 1 is a schematic sectional view of an optical disk according to an embodiment of the present invention, the representation is not drawn on an accurate scale. The optical disk of Figure 1 is fabricated by attaching a first disk 10 having a first recording layer 14 for recording CD standard data on a surface thereof to a second disk 12 having a second recording layer 16 for recording DVD standard data on a surface thereof by a connection layer 26 formed of a light transmissive adhesive. A first recording layer-free surface 34 of the first disk 10 is connected to a second layer-having surface 36 of the second disk 12. For convenience' sake, a recording layer-having surface 32 and the other surface 34 of the first disk 10 are referred to as "a protection surface 32" and "the first connection surface 34". The surface 36 and the other surface 38 of the second disk 12 are referred to as "the second connection surface 36" and "a reproduction surface 38", respectively. A laser beam for reproducing data from the first and second recording layers 14 and 16 is incident on the reproduction surface 38. The thickness of the second disk 12 is 0.6mm according to the DVD standard, and the total thickness of the first and second disks 10 and 12 is 1.2mm according to the CD standard.

In the first disk 10, the first recording layer 14 includes a first data pit pattern 40, an organic pigment layer 22, and a reflection film 20 on a protection film 18 of a surface of a first transparent substrate 24. The first data pit pattern 40 is produced by recording the CD standard data. The organic pigment layer 22 and the reflection film 20 under the first data pit pattern 40 act as a selective reflection layer having a high reflectance for a 780nm infrared laser beam and a high absorptance for a near-650nm red laser beam. For example, a reflection film in a conventional CD-R (Compact Disk Recordable), in which a user can write data once, has the same characteristics, and it is widely known that those skilled in the art can easily find such a disk.

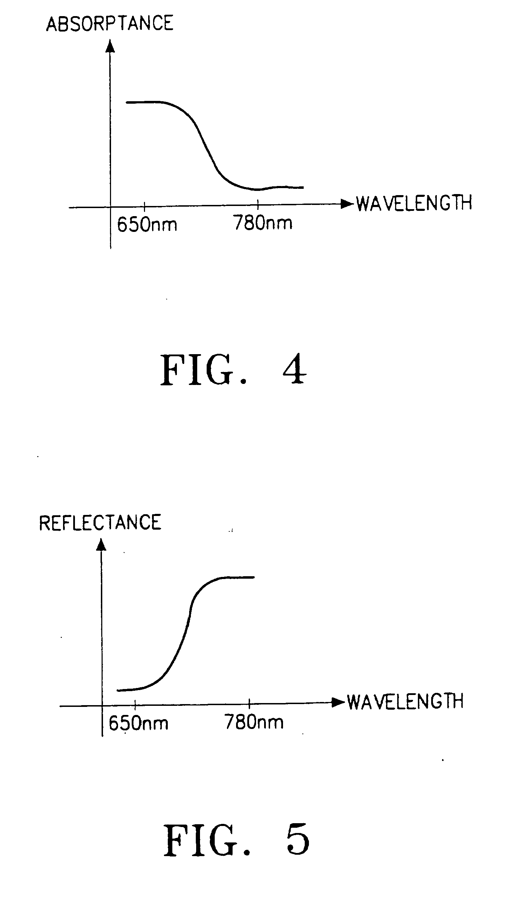

As shown in Figure 1, to constitute the selective reflection layer of the organic pigment layer 22 and the reflection film 20, the organic pigment layer 22 is formed of a composition, such as a cyanine-type dye, having a low absorptance for the 780nm laser beam and a high absorptance for the near-650nm laser beam. The reflection film 20 is formed of aluminium or gold, as in a conventional CD. Thus, the optical absorption characteristics of the selective reflection layer is shown in Figure 4 as those of the organic pigment layer 22, and the optical reflection characteristics thereof is shown in Figure 5.

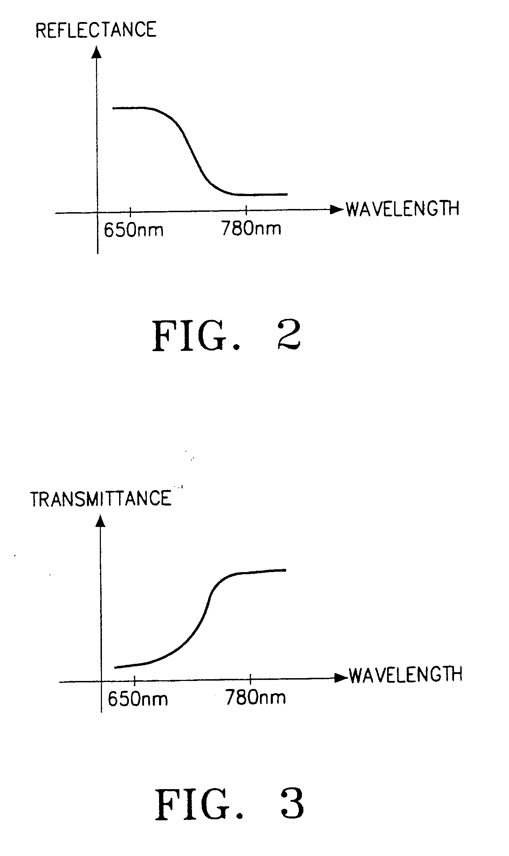

In the second disk 12, the second recording layer 16 includes a second data pit pattern 42 and a semitransmission film 28 on a surface of a second transparent substrate 30. The second data pit pattern 42 is produced by recording DVD standard data. The semitransmission film 28 between the second data pit pattern 42 and the connection layer 26 has a high transmittance for the 780nm laser beam and a reflectance as provided by the DVD standard, for the near-650nm laser beam. It is well-known to those skilled in the art that the above characteristics can be obtained by use of a dielectric film having a reflectance of 18-30% in a general dual DVD as the semitransmission film 28 of the second disk 12. The dielectric is a silicon nitride (SiN), for example. The optical reflection and transmission characteristics of the semitransmission film 38 are shown in Figures 2 and 3, respectively.

The first and second disks 10 and 12 as constituted above are connected to each other by an adhesive, with the first connection surface 34 of the first disk 10 facing the second connecting surface 36 of the second disk 12, and the total thickness of the first and second disks 10 and 12 is set to 1.2mm.

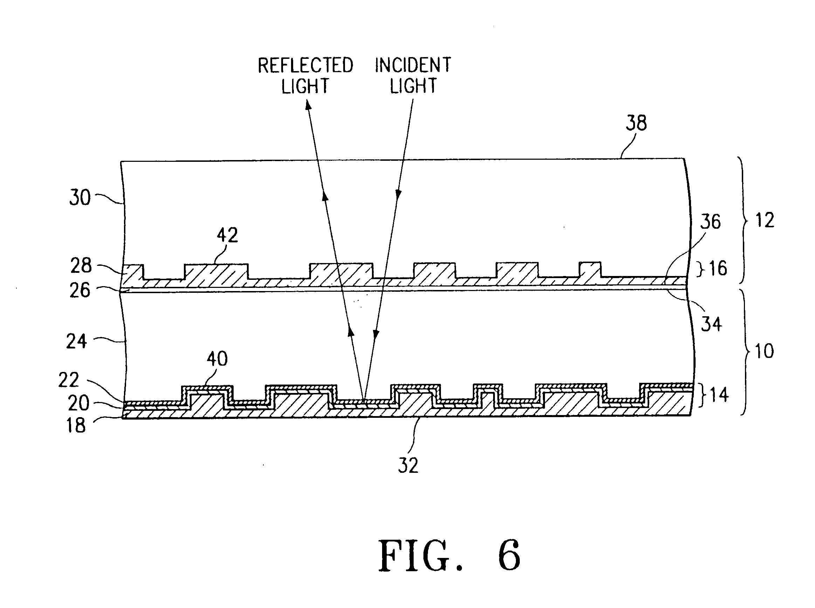

Figure 6 illustrates light transmission and reflection when the thus-obtained optical disk is reproduced by a CD reproducing device using a 780nm laser. Optical paths of incident light and reflected light are distinguished for a better understanding of the present invention, but depend on an optical system of the CD reproducing device in an actual situation. As shown in Figure 6, a 780nm laser light incident on the reproduction surface 38 is sequentially transmitted through the second transparent substrate 30, the semitransmission film 28, the connection layer 26, the first transparent substrate 24, and the organic pigment layer 22, and reflected from the reflection film 20. The reflected light returns through the organic pigment layer 22, the first transparent substrate 24, the connection layer 26, the semitransmission film 28, and the second transparent substrate 30 in reverse order. Thus, the optical disk can be reproduced by the conventional CD reproducing device, in effect as a conventional CD having a reflection film formed on a 1.2-mm thick transparent substrate therein.

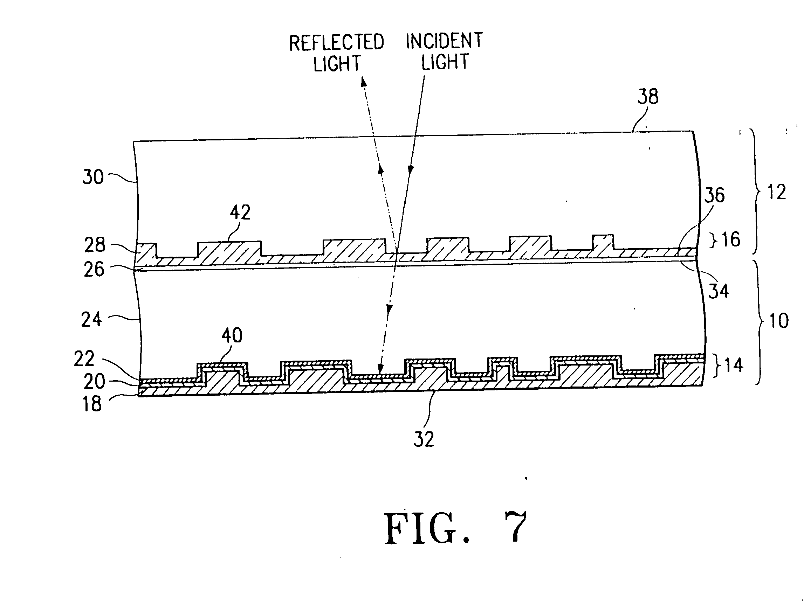

On the other hand, Figure 7 illustrates light transmission and reflection when the optical disk is reproduced by a DVD reproducing device using a 650nm laser. Optical paths of incident light and reflected light are distinguished for a better understanding of the present invention, but depend on an optical system of the DVD reproducing device in an actual situation. As shown in Figure 7, a 650nm laser light impinges on the reproduction surface 38, is transmitted through the second transparent substrate 30, and is reflected from the semitransmission film 28 by only 18-30%. The other non-reflected light is transmitted through the connection layer 26 and the first transparent substrate 24, and then absorbed in the organic pigment layer 22. Thus, only 18-30% of the incident light is reflected. Because the 18-30% reflectance corresponds to that of a dual DVD, the optical disk can be reproduced by applying the same optical amplification factor as in reproducing a dual DVD. In addition, the distance between the reproduction surface 38 and the second recording layer 16 is 0.6mm, which also contributes to reproduction of the optical disk by the DVD reproducing device.

In order to reproduce an identical music from a single optical disk according to the embodiment of the present invention by both CD and DVD standard reproducing devices, musical signal, digital data sampled in a sampling frequency of 44.1KHz is recorded as a music signal, reproducible by the CD standard reproducing device, on a CD surface of the optical disk, and as a high-quality music on the other DVD surface thereof, reproducible by the DVD standard reproducing device.

As described above, since a single optical disk satisfies a plurality of standards, it can be reproduced selectively by different standards-based optical disk reproducing devices.

While the present invention has been described with reference to the specific embodiment, many variations can be made by anyone skilled in the art within the scope of the present invention. Especially though an optical disk satisfying the CD and DVD standards is disclosed in the embodiment of the present invention, it can be extended to a plurality of standards as far as it has the same structure basically. That is, if such conditions as the wavelengths of light used, the thickness of an optical disk, data pit patterns, and the number of layers are varied, a selective reflection layer and a semitransmission film may be formed in compliance with the varied conditions. In this case, materials for the selective reflection layer and the semitransmission film are varied with wavelengths. Thus, the appropriate scope hereof is deemed to be in accordance with the claims as set forth below.

## Claims

1. An optical disk comprising:
a first transparent substrate (24) having a first data pit pattern (40) formed on a surface thereof by recording first standard data according to a first optical disk standard;
a reflection film (20) for reflecting the light of the first optical disk standard;
a second transparent substrate (30) having a second data pit pattern (42) formed on a surface thereof by recording data according to a second optical disk standard;
a semitransmission film (28) disposed between the data pit pattern-free surface (34) of the first transparent substrate (24) and the second data pit pattern (42), and having a high transmittance for light of the first optical disk standard and a high reflectance for light of the second optical disk standard; and
a connection layer (26) for connecting the data pit pattern-free surface (34) of the first transparent substrate (24) to the semitransmission film (28) in a light transmissive way;
**characterised in that**:
a further layer (22) is disposed between the reflection film (20) and the first data pit pattern (40) the further layer and the reflection film together forming a selective reflection layer and the further layer has a higher absorptance for the light of the second optical disk standard than for light of the first optical disk standard, and hence the selective reflection layer has a high reflectance for light of a wavelength based on a first optical disk standard and a high absorptance for light of a different wavelength based on a second optical disk standard different from the first standard.

2. The optical disk as claimed in claim 1, wherein the selective reflection layer (22) comprises an organic pigment layer (22).

3. The optical disk as claimed in claim 1 or 2, wherein the semitransmission film (28) is a dielectric film.

4. The optical disk as claimed in any of the preceding claims, further comprising a protection film (18) adjacent to the reflection film (20).

5. The optical disk as claimed in claim 4, wherein the total thickness of the semitransmission film (28) and the second transparent substrate (30) is set based on the second optical disk standard, and the total thickness of the protection film (18), the selective reflection layer (20, 22), the first transparent substrate (24), the semitransmission film (28), and the second transparent substrate (30) is set on the first optical disk standard.

6. The optical disk as claimed in claim 5, wherein the first optical disk standard thickness is 1.2mm, and the second optical disk standard thickness is 0.6mm.

7. The optical disk as claimed in any of the preceding claims, wherein the light of the first optical disk standard is a 780 laser beam, and the light of the second optical disk standard is a laser beam between 680nm and 635nm.

8. The optical disk as claimed in any of the preceding claims, wherein the first optical disk standard is a CD standard, and the second optical disk standard is a DVD standard.

9. The optical disk as claimed in any of the preceding claims 1 to 6, wherein the first optical disk standard light is between 680nm and 635nm, and the second optical disk light is shorter than 600nm.

## Patentansprüche

1. Optische Platte, umfassend:
ein erstes transparentes Substrat (24) mit einem ersten Daten-Pit-Muster (40), das durch das Aufzeichnen von ersten Standarddaten gemäß einem ersten Standard für optische Platten auf einer Fläche davon ausgebildet ist,
eine Reflexionsfolie (20) zum Reflektieren des Lichts des ersten Standards der optischen Platte,
ein zweites transparentes Substrat (30) mit einem zweiten Daten-Pit-Muster (42), das durch das Aufzeichnen von zweiten Standarddaten entsprechend einem zweiten Standard für optische Platten auf einer Fläche davon ausgebildet ist,
eine halbdurchlässige Folie (28), die zwischen der Fläche ohne Daten-Pit-Muster (34) des ersten transparenten Substrats (24) und dem Daten-Pit-Muster (42) aufgebracht ist und die einen hohen Durchlässigkeitsgrad für das Licht des ersten Standards der optischen Platte und einen hohen Reflexionsgrad für das Licht des zweiten Standards der optischen Platte aufweist, und
eine Verbindungsschicht (26) zum Verbinden der Fläche ohne Daten-Pit-Muster (34) des ersten transparenten Substrats (24) mit der halbdurchlässigen Folie (28) in einer lichtdurchlässigen Art und Weise,
**dadurch gekennzeichnet, dass**
zwischen der Reflexionsfolie (20) und dem ersten Daten-Pit-Muster (40) eine weitere Schicht (22) aufgebracht ist, die weitere Schicht und die Reflexionsfolie zusammen eine selektive Reflexionsschicht bilden und die weitere Schicht einen höheren Absorptionsgrad für das Licht des zweiten Standards der optischen Platte als für das Licht des ersten Standards der optischen Platte hat und die selektive Reflexionsschicht infolgedessen für Licht einer Wellenlänge, die auf einem ersten Standard der optischen Platte basiert, einen hohen Reflexionsgrad hat und für Licht einer verschiedenen Wellenlänge, die auf einem zweiten Standard der optischen Platte basiert, einen hohen Absorptionsgrad hat.

2. Optische Platte nach Anspruch 1, wobei die selektive Reflexionsschicht (22) eine organische Pigmentschicht (22) umfasst.

3. Optische Platte nach Anspruch 1 oder 2, wobei die halbdurchlässige Folie (28) eine dielektrische Folie ist.

4. Optische Platte nach einem der vorhergehenden Ansprüche, des Weiteren eine an die Reflexionsschicht (20) angrenzende Schutzfolie (18) umfassend.

5. Optische Platte nach Anspruch 4, wobei die Gesamtdicke der halbdurchlässigen Folie (28) und des zweiten transparenten Substrats (30) basierend auf dem zweiten Standard der optischen Platte eingerichtet wird und die Gesamtdicke der Schutzfolie (18), der selektiven Reflexionsschicht (20, 22), des ersten transparenten Substrats (24), der halbdurchlässigen Folie (28) und des zweiten transparenten Substrats (30) basierend auf dem ersten Standard der optischen Platte eingerichtet wird.

6. Optische Platte nach Anspruch 5, wobei die erste Standarddicke der optischen Platte 1,2 mm ist und die zweite Standarddicke der optischen Platte 0,6 mm ist,

7. Optische Platte nach einem der vorhergehenden Ansprüche, wobei das Licht des ersten Standards der optischen Platte ein Laserstrahl der Wellenlänge 780 nm ist und das Licht des zweiten Standards der optischen Platte ein Laserstrahl einer Wellenlänge zwischen 680 nm und 635 nm ist.

8. Optische Platte nach einem der vorhergehenden Ansprüche, wobei der erste Standard der optischen Platte ein CD-Standard ist und der zweite Standard der optischen Platte ein DVD-Standard ist.

9. Optische Platte nach einem der Ansprüche 1 bis 6, wobei das Licht des ersten Standards der optischen Platte von einer Wellenlänge zwischen 680 nm und 600 nm ist und das zweite optische Plattenlicht kürzer als 600 nm ist.

## Revendications

1. Disque optique comprenant :
un premier substrat transparent (24), sur une surface duquel un premier motif de micro-cuvettes de données (40) est formé par enregistrement de premières données normalisées selon une première norme de disque optique ;
une couche réfléchissante (20) pour réfléchir la lumière de la première norme de disque optique ;
un second substrat transparent (30), sur une surface duquel un second motif de micro-cuvettes de données (42) est formé par enregistrement de données normalisées selon une seconde norme de disque optique ;
une couche semi-transmissive (28), disposée entre la surface exempte de motif de micro-cuvettes de données (34) du premier substrat transparent (24) et le second motif de micro-cuvettes de données (42), et ayant un coefficient de transmission élevé pour la lumière de la première norme de disque optique, et un coefficient de réflexion élevé pour la lumière de la seconde norme de disque optique ; et
une couche de liaison (26), pour relier la surface exempte de motif de micro-cuvettes de données (34) du premier substrat transparent (24) à la couche semi-transmissive (28) de manière à transmettre la lumière ;
**caractérisé en ce que** :
une autre couche (22) est disposée entre la couche réfléchissante (20) et le premier motif de micro-cuvettes de données (40), cette autre couche et la couche réfléchissante formant ensemble une couche de réflexion sélective, et l'autre couche a un coefficient d'absorption plus élevé pour la lumière de la seconde norme de disque optique que pour la lumière de la première norme de disque optique et, par conséquent, la couche de réflexion sélective a un coefficient de réflexion élevé pour la lumière d'une longueur d'onde selon la première norme de disque optique, et un coefficient d'absorption élevé pour la lumière d'une longueur d'onde différente selon la seconde norme de disque optique, différente de la première norme.

2. Disque optique selon la revendication 1, dans lequel la couche de réflexion sélective (22) comprend une couche de pigment organique (22).

3. Disque optique selon la revendication 1 ou 2, dans lequel la couche semi-transmissive (28) est une couche diélectrique.

4. Disque optique selon l'une quelconque des revendications précédentes, comprenant en outre une couche de protection (18), adjacente à la couche réfléchissante (20).

5. Disque optique selon la revendication 4, dans lequel l'épaisseur totale de la couche semi-transmissive (28) et du second substrat transparent (30) est fixée selon la seconde norme de disque optique, et l'épaisseur totale de la couche de protection (18), de la couche de réflexion sélective (20, 22), du premier substrat transparent (24), de la couche semi-transmissive (28) et du second substrat transparent (30) est fixée selon la première norme de disque optique.

6. Disque optique selon la revendication 5, dans lequel l'épaisseur selon la première norme de disque optique est de 1,2 mm, et l'épaisseur selon la seconde norme de disque optique est de 0,6 mm.

7. Disque optique selon l'une quelconque des revendications précédentes, dans lequel la lumière selon la première norme de disque optique est un faisceau laser de 780 nm, et la lumière du disque optique selon la seconde norme de disque optique est un faisceau laser entre 680 nm et 635 nm.

8. Disque optique selon l'une quelconque des revendications précédentes, dans lequel la première norme de disque optique est une norme de disque compact (CD), et la seconde norme de disque optique est une norme de disque vidéo numérique (DVD).

9. Disque optique selon l'une quelconque des revendications 1 à 6, dans lequel la lumière de la première norme de disque optique est comprise entre 680 nm et 635 nm, et la lumière de la seconde norme de disque optique est plus courte que 600 nm.
